# EUROPEAN PATENT APPLICATION

(11) **EP 1 753 242 A2**
(43) Date of publication of application: **14.02.2007**
(21) Application number: 05022148.0
(22) Date of filing: 11.10.2005
(51) Int. Cl.: H04N 7/26

(54) **Switchable mode and prediction information coding**

(30) Priority: 18.07.2005 EP 05015562
(71) Applicant: MATSUSHITA ELECTRIC INDUSTRIAL CO., LTD., Kadoma-shi, Osaka 571-8501 (JP)
(72) Inventor: Wedi, Thomas Dr., 64823 Gross-Umstadt (DE); Wittmann, Steffen, 64546 Moerfelden-Walldorf (DE); Kondo, Satoshi Dr., Yawata Kyoto 614-8361 (JP); Saito, Hiroshi, Sakai Osaka 591-8025 (JP)
(74) Representative: Grünecker, Kinkeldey, Stockmair & Schwanhäusser Anwaltssozietät

(57) **Abstract**

The present invention relates to encoding and decoding of video data consisting of a plurality of image components. The present invention provides an encoder and a decoder together with methods to signal to the decoder the number of prediction modes that have been employed for encoding the image components. The decoder is thus able to detect the signaled number of prediction modes from the encoded video data and to decode the image components accordingly. Moreover, the decoder signals the image components that have been predicted by a common prediction mode and the image components that have been predicted independently. The decoder is thus able to assign the correct prediction mode to each image component and decode the image components accordingly.

## Description

The present invention relates to the compression of video data. Particularly, the present invention relates to a method for compressing and decompressing video data consisting of a plurality of image components with improved coding efficiency and a corresponding encoder and decoder.

### BACKGROUND OF THE INVENTION

Video data is being adopted in increasing numbers of applications, ranging from video-telephoning and video-conferencing to DVD and digital television. When video data is being transmitted or recorded, a substantial amount of data has to be sent through conventional transmission channels of limited available frequency bandwidth or has to be stored on conventional storage media of limited data capacity. In order to transmit and store digital data on conventional channels/media, it is inevitable to compress or reduce the volume of digital data.

For the compression of video data, a plurality of video encoding standards has been developed. Such video standards are, for instance, ITU-T standards denoted with H.26x and ISO/IEC standards denoted with MPEG-x. The most up-to-date and advanced video encoding standard is currently the standard denoted as H.264/MPEG-4 AVC.

The encoding approach underlying most of these standards is based on predictive coding comprising the following main stages:
(a) Separating the video data into three independent color components.
(b) Dividing video frames into blocks of pixels in order to subject each color component of each video frame to data compression at block level.
(c) Identifying temporal and spatial redundancies by predicting the individual color components of each block from previously encoded video data.
(d) Removing the identified redundancies by subtracting the predicted data from the video data.
(e) Compressing the remaining data by means of Fourier transformation, quantization, and entropy coding.

Current video coding standards differ in the prediction modes that are employed for predicting each macroblock. Most video coding standards use motion estimation / compensation to predict video data from previously encoded frames (inter-frame prediction). Alternatively, block data may also be extrapolated from neighboring blocks of the same frame (intra-frame prediction). The H.264/AVC standard defines several intra-frame prediction modes that differ, for example, with respect to the reference pixels used for extrapolation or with respect to the direction in which the pixels are extrapolated.

In many applications, the volume or bandwidth available for storing or transmitting encoded video data is seriously restricted. There is thus the urgent need to compress the video data as far as possible. However, increasing data compression rate by quantizing the video data more coarsely, inevitably leads to a deterioration of image quality.

Normally, video data is coded using the YUV color space, where Y represents the luminance component and U & V represent the two chrominance components. Since the luminance is generally more important than the chrominance component in a signal, the video data is usually in 4:2:2 or 4:2:0 format, i.e., the chrominance components are encoded in a reduced resolution as compared to the luminance component. Hence, current standards use different modes and different prediction information for luminance and chrominance. For example, H.264/AVC uses one individual mode out of 9 modes for intra-predicting the luminance-component and one common mode out of 4 modes for the two chrominance-components.

According to H.264/AVC, video data in the RGB color space format is coded and decoded using the same method as the conventional method of coding and decoding YUV data by mapping the RGB data to YUV data. In this mapping, the G component is mapped to the Y component, and B and R are mapped to the U and V components, respectively.

Hence, the conventional method for video data compression is disadvantageous for applications that are based on 4:4:4 color space coding, because the reduced number of prediction modes for the chrominance components might significantly harm the coding efficiency. Moreover, in applications that are based on direct RGB coding, the discrimination of the G component on the one hand side and the B and R component on the other hand will significantly deteriorate coding efficiency.

Employing a common prediction mode for U and V components implies, that the same prediction information has to be used for both the U and the V data. The same holds true for the B and R component in case of video data in RGB color space format. Therefore, if the process of coding and decoding video data in RGB 4:4:4 format is parallelized into separate sub-processes for coding and decoding R data, G data, and B data, information on intra-frame prediction modes and motion vectors has to be shared between these sub-processes. This leads to an increased complexity of the coding and the decoding apparatus and hampers parallelization of the underlying coding and decoding methods.

### SUMMARY OF THE INVENTION

The aim of the present invention is to provide a method together with the corresponding encoder and decoder for compressing and decompressing video data with improved adaptivity to coding efficiency and complexity requirements.

This is achieved by the features as set forth in the independent claims.

Preferred embodiments are the subject matter of dependent claims.

It is the particular approach of the present invention to improve flexibility of the encoder by providing a method to signal to the decoder the number of prediction modes that have been employed for encoding the image components. The decoder is thus able to detect the signaled number of prediction modes from the encoded video data and to decode the image components accordingly. Moreover, the decoder can signal the image components that have been predicted by a common prediction mode and the image components that have been predicted independently. The decoder is thus able to assign the correct prediction mode to each image component and decode the image components accordingly.

According to a first aspect of the present invention, a method for decoding encoded video data, said video data consisting of a plurality of image components, is provided. The method extracts a number identifier from the encoded video data, determines the number of prediction modes to be detected from the encoded video data in accordance with the extracted number identifier, detects the determined number of prediction modes from the encoded video data, assigns one of the detected prediction modes to each of the image components, and decodes each of the image components in accordance with the assigned prediction mode.

According to a further aspect of the present invention, a decoding apparatus for decoding encoded video data, said video data consisting of a plurality of image components, is provided. The decoding apparatus comprises an extracting means for extracting a number identifier from the encoded video data, a determining means for determining the number of prediction modes to be detected from the encoded video data in accordance with the extracted number identifier, a detector for detecting the determined number of prediction modes from the encoded video data, an assigning means for assigning one of the detected prediction modes to each of the image components, and a decoder for decoding each of the image components in accordance with the assigned prediction mode.

According to a first aspect of the present invention, a method for encoding video data, said video data consisting of a plurality of image components, is provided. The method encodes each of the image components in accordance with a predetermined number of prediction modes for obtaining encoded video data, inserts the prediction modes into the encoded video data, and inserts a number identifier into the encoded video data, said number identifier identifies the predetermined number of said prediction modes.

According to a further aspect of the present invention, an encoding apparatus for encoding video data, said video data consisting of a plurality of image components, is provided. The encoding apparatus comprises an encoder for encoding each of the image components in accordance with a predetermined number of prediction modes for obtaining encoded video data, a first inserting means for inserting the prediction modes into the encoded video data, and a second inserting means for inserting a number identifier into the encoded video data, said number identifier identifies the predetermined number of said prediction modes.

Preferably, assignment information is extracted from the encoded video data, said assignment information identifying for each image component the prediction mode that is to be assigned to said image component. In this manner, the decoder can assign the correct prediction mode to each of the image components even in cases where some image components are predicted independently and some are predicted by a common prediction mode. This assignment information is optional in cases where all image components are predicted either commonly or independently, since the assignment is obvious in these cases.

Preferably, the assignment information contains a reference to one of a plurality of predefined assignments of prediction modes and the corresponding image components. In this way, the signaling overhead can be reduced and the coding efficiency can be improved, because a reference to one of a predefined ways of how prediction modes are assigned to the image components is typically less demanding than providing, for instance, a full specification in form of a table, etc.

Preferably, the steps of detecting, assigning and decoding are performed on block or macroblock level. Typically, video data is coded on a block-by-block basis. Therefore, the prediction modes will change from one block to the next and in order to enable the decoder to correctly decode the encoded video data, the decoder has to keep track of these changes.

Preferably, the steps of extracting and determining are performed on profile, level, sequence, picture, slice, macroblock, or block level. There is no need to change the way how prediction mode information is encoded on a block-by-block basis. Therefore, signaling overhead can be reduced and coding efficiency increased by signaling this information only when needed, i.e., upon changing the way prediction mode information is encoded, independently of the steps of detecting, assigning and decoding.

Preferably, the prediction modes comprise indication for either inter or intra prediction, information on macroblock partition, information on motion vectors, and information on intra-prediction modes. Therefore, the decoder can reproduce the prediction performed by the encoder and reconstruct the corresponding block of video data.

Preferably, the plurality of image components comprises a plurality of color components, such as luminance and chrominance components or red, green, and blue color components. This are the typical examples for video data consisting of a plurality of image components. However, the plurality of image components may also comprise foreground and background video components, such as in a chroma keying application. The encoded video data is preferably in either of 4:4:4, 4:2:2, or 4:2:0 format.

Preferably, the number identifier is a binary representation of the number of prediction modes. This allows easy interpretation of the number identifier by the decoder as well as an efficient way to insert the number identifier into the bitstream without unduly increasing the signaling overhead.

Preferably, the number identifier is a one-bit flag indicating that either one prediction mode or three prediction modes have to be detected from the encoded video data. In this way, the number of prediction modes to be detected can be signaled most efficiently.

Preferably, assignment information is inserted into the encoded video data, said assignment information identifying for each image component the prediction mode that has been used to encode said image component. In this manner, the decoder can detect the assignment information from the encoded video data and assign the correct prediction mode to each of the image components even in cases where some image components are predicted independently and some are predicted by a common prediction mode. This assignment information is optional in cases where all image components are predicted either commonly or independently, since the assignment is obvious in these cases.

Preferably, the step of encoding image components and inserting the prediction modes are performed on macroblock or block level. Typically, video data is coded on a block-by-block basis. Therefore, the prediction modes will change from one block to the next in order to always use the best possible prediction mode.

Preferably, the step of inserting the number identifier is performed on profile, level, sequence, picture, slice, macroblock, or block level. Generally, there is no need to change the way how prediction mode information is encoded on a block-by-block basis. Therefore, signaling overhead can be reduced and coding efficiency increased by signaling this information only when needed, i.e., upon changing the way prediction mode information is encoded.

Preferably, there is a step of determining the predetermined number of prediction modes. In this manner, the best way of encoding the prediction mode information can be chosen. Moreover, coding efficiency requirements and/or computational complexity requirements can be met by setting the number of prediction modes per block used for encoding the image components adaptively.

Preferably, the image components are encoded in accordance with a common prediction mode and wherein the predetermined number of prediction modes equals one. In this manner, the overhead related to coding the prediction modes can be reduced to a minimum since only one prediction mode per block or macroblock has to be inserted into the bitstream.

Preferably, the image components are encoded in accordance with independent prediction modes and wherein the predetermined number of prediction modes equals the number of image components. In this manner, each image component can be encoded and decoded independently from the other components thus reducing computational complexity and allowing for an easy parallelization of the encoding an decoding processes. Further, for poorly correlated or uncorrelated image components, coding efficiency can be maximized by selecting prediction modes for each image component independently.

The above and other objects and features of the present invention will become more apparent from the following description and preferred embodiments given in conjunction with the accompanying drawings, in which:
- Fig.1: schematically illustrates in block diagram form a configuration of a conventional hybrid video encoder,
- Fig. 2A: illustrates intra-prediction according to the H.264/AVC standard,
- Fig. 2B: illustrates the set of predefined intra-prediction modes according to the H.264/AVC standard,
- Fig. 3: schematically illustrates in block diagram form the configuration of a conventional hybrid video decoder,
- Fig. 4: schematically illustrates the composition of video data in RGB color space format,
- Fig. 5A: shows an example of a bitstream with multiplexing of independently intra-predicted RGB color components on macroblock level,
- Fig. 5B: shows an example of a bitstream with multiplexing of independently intra-predicted RGB color components on slice level,
- Fig. 5C: shows an example of a bitstream with a flag indicating the use of common or independent prediction mode coding,
- Fig. 5D: shows an example of a bitstream with multiplexing of independently inter-predicted RGB color components on macroblock level,
- Fig. 5E: shows an example of a bitstream with a macroblock of independently intra-predicted RGB color components followed by a macroblock of commonly inter-predicted RGB color components,
- Fig. 6A: illustrates bitstream signaling of predicting image components by independently selected prediction modes,
- Fig.6B: illustrates bitstream signaling of predicting image components by a common prediction mode,
- Fig. 6C: illustrates bitstream signaling of predicting two image components by a common prediction mode and a third image component by an independent prediction mode,
- Fig. 6D: illustrates adaptive bitstream signaling of predicting image components by a common prediction mode or a set of independently selected prediction modes.

### DETAILED DESCRIPTION

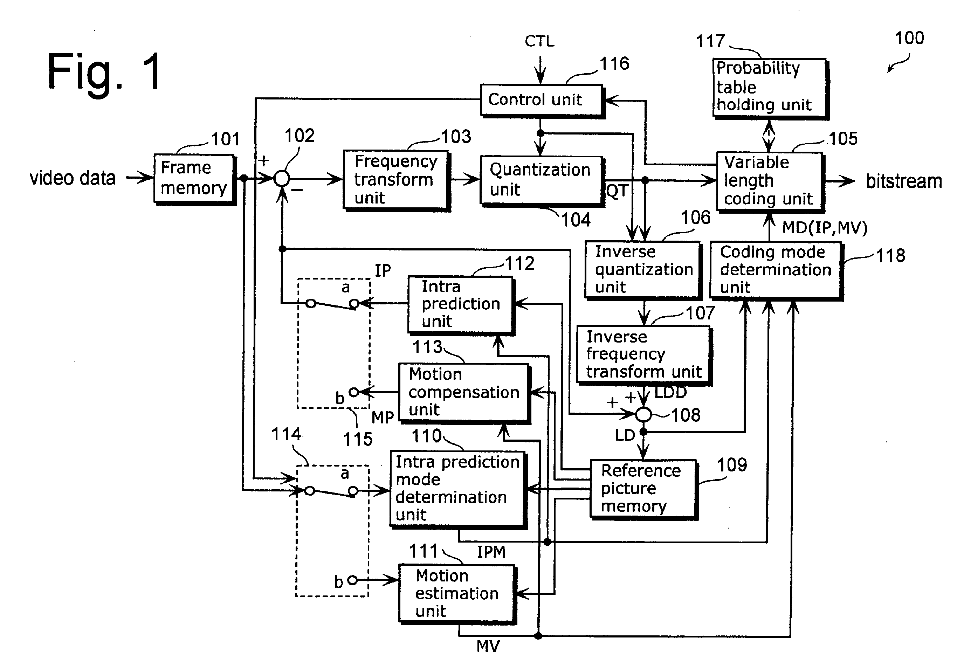

Referring to Fig. 1, an example of a hybrid video encoder is illustrated. The video encoder, generally denoted by reference numeral 100, comprises a frame memory 101, a subtracting unit 102, a frequency transform unit 103, a quantization unit 104, a variable length coding unit 105, an inverse quantization unit 106, an inverse frequency transform unit 107, an adding unit 108, a reference picture memory 109, an intra prediction mode determination unit 110, an intra prediction unit 112, a control unit 116 and a probability table holding unit 117.

Each frame of the input video data is stored in the frame memory 101 and then outputted from the frame memory 101 on a block-by-block basis (e.g. in units of macroblocks having horizontal 16 pixels and vertical 16 pixels).

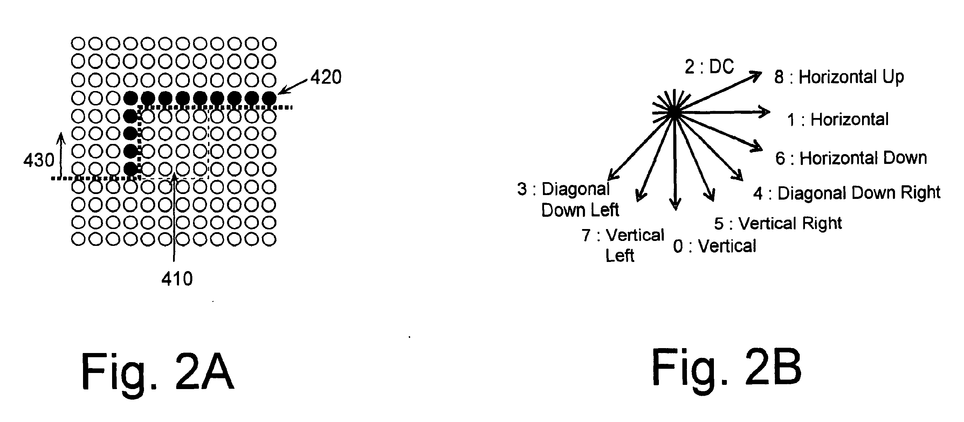

Each macroblock can either be coded in intra or in inter prediction mode. In case of intra-frame prediction, the macroblock outputted from the frame memory 101 is inputted to the intra prediction mode determination unit 110 (the switch 114 is connected to "a" by the control unit 116). The intra prediction mode determination unit 110 determines how to perform intra prediction on the inputted macroblock. As an intra prediction mode (IPM), it is necessary to determine an intra prediction block size (one of the following sizes: horizontal 4 pixels x vertical 4 pixels; horizontal 8 pixels x vertical 8 pixels; and horizontal 16 pixels x vertical 16 pixels), and an intra prediction direction (e.g. an intra prediction current block 410 is predicted in nine different intra prediction directions using pixel group 420, cf. FIG. 2). Here, it is assumed that reference pixels (pixels shown as black circles in FIG. 2A) to be used for the intra prediction have already been coded and stored in the reference picture memory 109. The information indicating the IPM determined intra prediction mode IPM is outputted to the intra prediction unit 112 and the variable length coding unit 105.

The intra prediction unit 112, based on the intra prediction mode IPM determined by the intra prediction mode determination unit 110, obtains intra reference pixels from the reference picture memory 109, generates an intra predictive image IP, and outputs the intra predictive image IP to the subtracting unit 102.

The subtracting unit 102 receives the macroblock of the input picture from the frame memory 101 and the intra predictive image IP generated by the intra prediction unit 112, generates a differential image between the macroblock and the intra predictive image IP, and outputs the differential image to the frequency transform unit 103.

The frequency transform unit 103 performs frequency transformation on the differential image generated by the prediction unit 112, and outputs frequency transform coefficients.

The quantization unit 104 performs quantization of the frequency transform coefficients generated by the frequency transform unit 103, and outputs the quantized frequency transform coefficients QT. Here, the quantization is a process of dividing the frequency transform coefficients by a predetermined value (quantization step). It is assumed that this quantization step is given by the control unit 116 (the quantization step may be included in a control signal CTL from the control unit 106). The quantized frequency transform coefficients QT are outputted to the variable length coding unit 105 and the inverse quantization unit 106.

The quantized frequency transform coefficients QT are inverse quantized by the inverse quantization unit 106, inverse frequency transformed by the inverse frequency transform unit 107, and become a decoded differential image LDD. The decoded differential image LDD is added to the predicted image IP or MP in the adding unit 108, becomes a decoded image LD, and stored in the reference picture memory 109. The decoded image LD stored in the reference picture memory 109 is used in a later coding as a reference picture.

The variable length coding unit 105 performs variable length coding on the quantized frequency transform coefficients QT inputted from the quantization unit 104, information indicating the prediction mode IPM inputted from the intra prediction mode determination unit 110 and the like, and outputs a bitstream, which is also referred to as a code sequence.

Here, as a method of the variable length coding method used in the variable length coding unit 105, there is a context adaptive arithmetic coding method adopted in the international standard moving picture coding method H.264. The context adaptive arithmetic coding method is a method of switching the probability tables used for arithmetic coding according to the variable length coding target data and data on which the variable length coding has already been performed (context adaptation). For example, as a context for performing variable length coding of the quantized frequency transform coefficients QT, a block size for intra prediction and a block size for frequency transformation and the like are used. Here, it is assumed that the probability tables are held in the probability table holding unit 117.

In case of inter prediction, the macroblock outputted from the frame memory 101 is inputted to the motion estimation unit 111 (the switch 114 is connected to "b" by the control unit 116). The motion estimation unit 111 estimates, for the inputted macroblock, the motion (motion vector) to the reference picture (a coded picture that is held in the reference picture memory 109 and is different from the picture to be coded). In the motion estimation, generally the following motion vector is selected: the motion vector having a minimum differential value between the block to be coded and a predictive image (an image in the reference picture referred by the motion vector) and a minimum sum of weights for coding amount of the motion vector. The estimated motion vector is outputted to the motion compensation unit 113 and the coding mode determination unit 105.

The motion compensation unit 113 generates a predictive image MP by obtaining inter reference pixels from the reference picture memory 109 based on the motion vector determined by the motion estimation unit 111, and outputs the predictive image MP to the subtracting unit 102 (the switch 115 is connected to "b" by the control unit 116).

The processing performed by the subtracting unit 102, the frequency transform unit 103, the quantization unit 104, the inverse quantization unit 106, the inverse frequency transform unit 107 and the adding unit 108 is same as the processing described in the case of intra prediction. Therefore, the explanation about the processing is omitted here.

The coding mode determination unit 118 determines a coding mode of a macroblock to be coded using outputs from the intra prediction mode determination unit 110, motion estimation unit 111, quantization unit 104, frame memory 101, and adding unit 108, and the like. Here, it is determined which one of the intra-picture prediction coding and the inter-picture prediction coding is used for coding the macroblock to be coded. For determining the coding mode, in general, a coding mode having a small value of the sum of weights between the amount of bits to be generated and the coded distortion. In the case where the intra-picture prediction coding is selected as the coding mode, the information indicating the intra prediction mode IPM is outputted to the variable length coding unit 105, while the motion vector MV and the coding mode MD are outputted to the variable length coding unit 105 in the case where the inter-picture prediction coding is selected as a coding mode.

The variable length coding unit 105 performs variable length coding on a quantized frequency transform coefficients QT inputted from the quantization unit 104 and on the coding mode MD and the intra prediction mode IPM or the motion vector MV outputted from the coding mode determination unit 118, and outputs a bitstream.

Here, in the case where the variable length coding unit 105 codes the motion vector MV using a context adaptive arithmetic coding method, a method of changing a probability table depending on a size (context) of the motion vector of the coded peripheral block can be used. Here, it is assumed that the probability tables have been held in the probability table holding unit 117.

A prediction mode contains the full set of information that is required by the decoder to reproduce the prediction performed by the encoder in the process of encoding the video data. Therefore, a prediction mode defines the coding mode for each macroblock, i.e., whether intra or inter prediction is applied. Further, the prediction mode comprises information on how the macroblock is subdivided. According to H.264/AVC, a macroblock consists of 16x16 pixels that may, for instance in case of intra prediction, be further subdivided into blocks of 8x8 or 4x4 pixels each.

Depending on the coding mode, the prediction mode further specifies the set of motion vectors employed for motion compensation or the intra prediction mode applied to intra predict the block under consideration.

Figure 2 illustrates intra prediction modes as defined in the H.264/AVC standard. As shown in Fig. 2A, a block of 4x4 pixels (410) is predicted from previously encoded pixels (430) by extrapolating a set of 13 reference pixels (420) located above and to the left of the pixel block (410) to be predicted. In order to perform the extrapolation, one out of nine possible extrapolation direction shown in Fig 2B is selected.

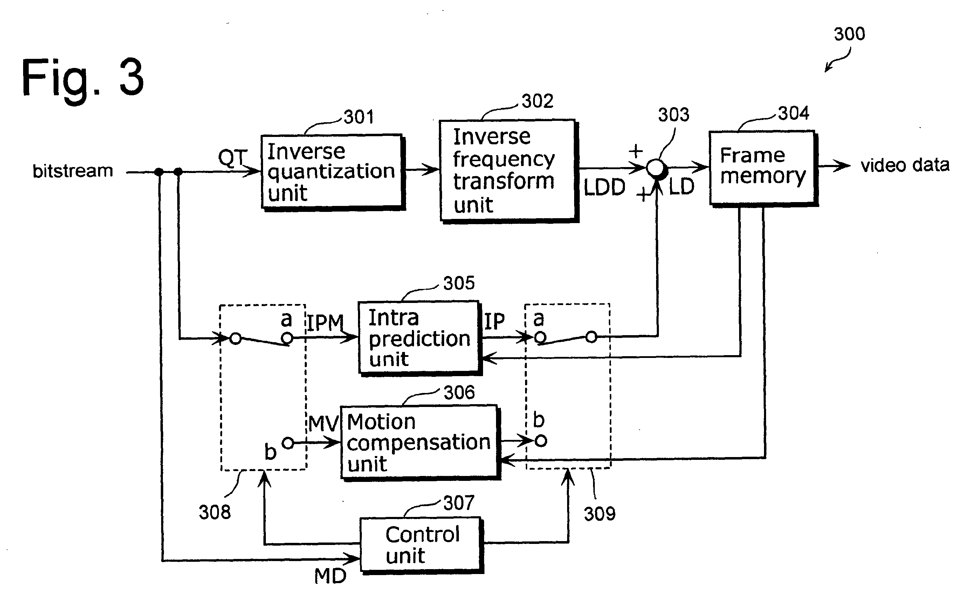

Referring to Fig. 3, an example of a hybrid video decoder is illustrated. As shown in FIG. 3, the decoding unit 300 is made up of an inverse quantization unit 301, an inverse frequency transform unit 302, an adding unit 303, a frame memory 304, an inter prediction unit 305, a motion compensation unit 306, a control unit 307, and switches 308 and 309.

The decoding unit 302 decodes each block of the encoded video data either as an intra or inter-frame prediction coded block. The coding mode MD is inputted to the control unit 307, the information indicating the intra prediction mode IPM or the motion vector MV is inputted to the switch 308, and the quantized frequency transform coefficients QT are inputted to the inverse quantization unit 301.

The control unit 307 controls the switch 308 based on the coding mode MD. In the case where the coding mode MD indicates the intra prediction coding, the switch 308 is connected to "a", and the information indicating the intra prediction mode IPM is inputted to the intra prediction unit 305. In the case where the coding mode MD indicates the inter-picture prediction coding, the switch 308 is connected to "b", the motion vector MV is inputted to the motion compensation unit 306

In case of an intra prediction coded block, the switches 308 and 309 are connected to "a". The information indicating the intra prediction mode is thus inputted to the intra prediction unit 305 and the quantized frequency transform coefficients QT are inputted to the inverse quantization unit 301.

The intra prediction unit 305, based on the inputted intra prediction mode, obtains intra reference pixels from the frame memory 304, generates an intra predictive image, and outputs the intra predictive image to the adding unit 303.

The quantized frequency transform coefficients QT are inverse quantized by the inverse quantization unit 301, are further inverse frequency transformed by the inverse frequency transform unit 302, and become a decoded differential image LDD. The decoded differential image LDD is added to the intra predictive image IP by the adding unit 303 so as to obtain the decoded image LD, and stored in the frame memory 304. The decoded image stored in the frame memory 304 is used as a reference picture in a later decoding. Also, it is outputted to form the decoded video data.

In case of an inter predicted block, the switches 308 and 309 are connected to "b". The coding mode MD is thus inputted to the control unit 307, the information indicating the intra prediction mode IPM or the motion vector MV is inputted to the switch 308, and the quantized frequency transform coefficients QT are inputted to the inverse quantization unit 301.

The motion compensation unit 306, based on the inputted motion vector MV, obtains reference pixels from the frame memory 304, generates a predictive picture, and outputs the predictive picture to the adding unit 303.

The processing of the inverse quantization unit 301, inverse frequency transform unit 302 and adding unit 303 are same as the processing explained in the case of intra predicted blocks. The decoded images LDs are stored in the frame memory 304. The decoded images stored in the frame memory 304 are used as reference pictures for the later decoding. Also, the decoded images are outputted to form the decoded video data.

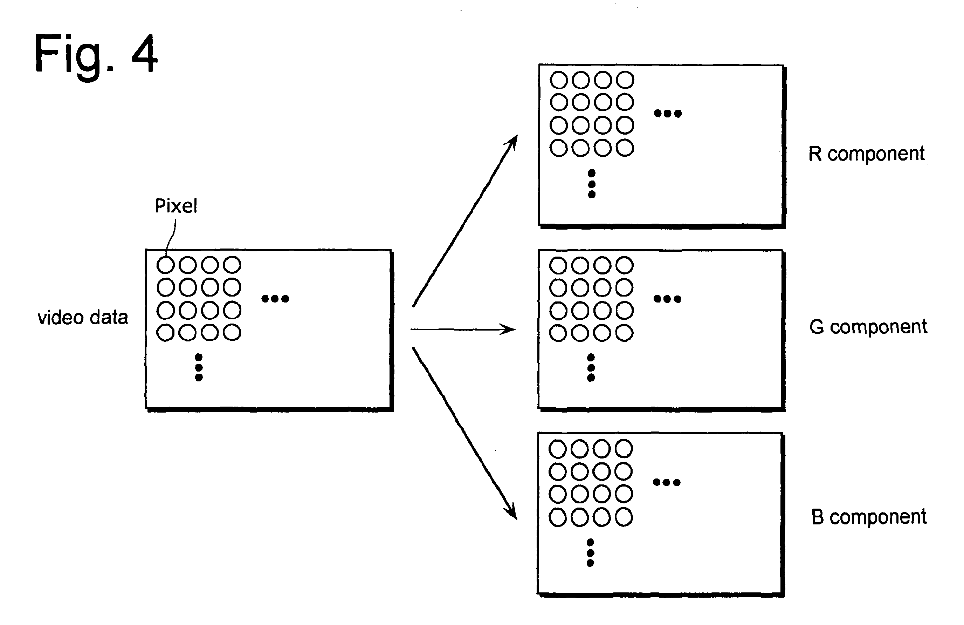

Video data usually consists of several image components, such as three different color components. Figure 4 illustrates an example of video data coded in the red/green/blue (RGB) color space. The video data consists of three image components, each of them representing one of the color components red, green, and blue.

Video data may also be coded in other color spaces, such the luminance/chrominance (YUV) color space, where one image component represents luminance (Y) and two image components represent the two chrominance components (U, V).

However, video data may also consist of image components other than color components, such as foreground and background video data as in a chroma keying application.

Each image component is encoded separately by the above described video encoder 100 and the resulting bitstreams of each image component are multiplexed so as to form one output bitstream.

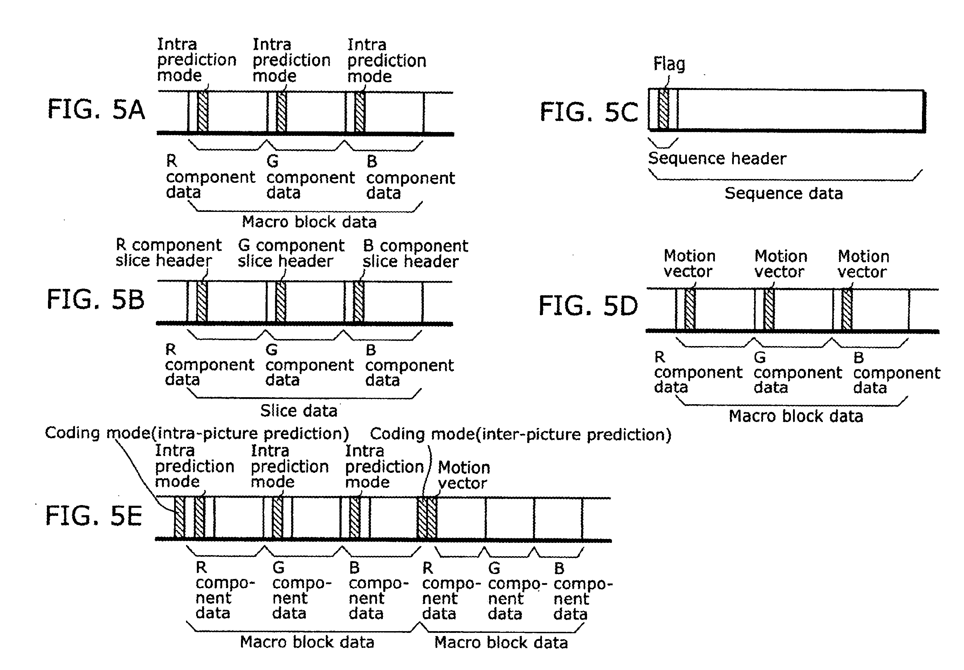

The multiplexing can be performed on the level of individual blocks or macroblocks, as well as on the level of slices, fields, frames, pictures, sequences, etc. Figures 5A and 5D show examples of the structure of a bitstream multiplexed on macroblock level in case of intra and inter prediction, respectively; Fig 5B shows an example of the structure of a bitstream multiplexed on slice level, which results in a reduced multiplexing overhead.

Similarly, the decoder has to separate the input bitstream into data of the individual image components after performing variable length decoding of the input bitstream, and decodes data of each image component separately. The decoded image components are then re-assembled upon storing or displaying the decoded video data.

According to the H.264/AVC standard, the luminance component and the chrominance component are handled independently by the video encoder 102, i.e., prediction modes for luminance and chrominance components are determined independently of each other. Therefore, the luminance components of a block may be predicted by different prediction modes than the chrominance components or may even be coded by a different coding mode. The two chrominance components, however, are coded in the same coding mode and predicted by a common prediction mode. Consequently, two prediction modes have to be encoded in the bitstream for each block of video data according to H.264/AVC.

Moreover, since the chrominance components are less important than the luminance component, the chrominance component is usually coded with reduced resolution only. The H.264/AVC standard thus provides only a reduced set of intra prediction modes for the chrominance component. Whereas the luminance component can be predicted by one out of nine intra prediction modes (cf. Fig 2B), the chrominance component can only be predicted by one out of four different intra prediction modes.

According to H.264/AVC, video data in the RGB color space format is coded and decoded using the same method as for coding and decoding YUV data by mapping the RGB data to YUV data. In this mapping, the G component is mapped to the Y component, and B and R are mapped to the U and V components, respectively.

In case of video data coded in the RGB color space in 4:4:4 format, the H.264/AVC standard is thus disadvantageous because the discrimination of the B and the R component can significantly harm coding efficiency and image quality. Generally, the H.264/AVC standard is disadvantageous for any type of video data where image components are equally important and have the same spatial resolution.

The above problem can be overcome by using a common prediction mode for all image components. This is particularly advantageous for video data where all image components are highly correlated so that they can be predicted equally well by the same prediction mode. This is typically the case for RGB data where, for instance, each image component exhibits the same motion so that a common set of motion vectors can be employed.

In case that one common prediction mode is used to encode all image components of a block or macroblock, the prediction mode itself has to be encoded in the bitstream only once. Hence, coding efficiency can be improved. Consequently, the decoder has to detect the prediction mode only once from the encoded video data to decoded the image components.

Alternatively, a set of independently selected prediction modes can be used, one prediction mode for each image component. This is particularly advantageous for poorly correlated image components so that each image component can be predicted with the optimal prediction mode. This is typically the case for RGB data with smooth color transitions that are predicted best by independent intra prediction modes for each color component. This is also the case for totally uncorrelated image components such as foreground and background in a chroma keying application.

Furthermore, predicting the individual color components independently can also reduce the computational complexity of the encoding and decoding processes, because each image component can readily be handled by a separate subprocess. The subprocesses can operate at a large extend independently of each other because no information on a common prediction mode has to be exchanged. This lends itself to parallelization of the encoding and decoding process which is particularly important for high-resolution video under real-time requirements.

In case that a set of independent prediction mode is used to encode the image components, each prediction mode has to be encoded in the bitstream. Nevertheless, coding efficiency can be improved provided that the gain in an improved prediction outweighs the prediction mode coding overhead. Consequently, the decoder has to detect the full number of prediction modes from the encoded video data for each block or macroblock to decoded the image components.

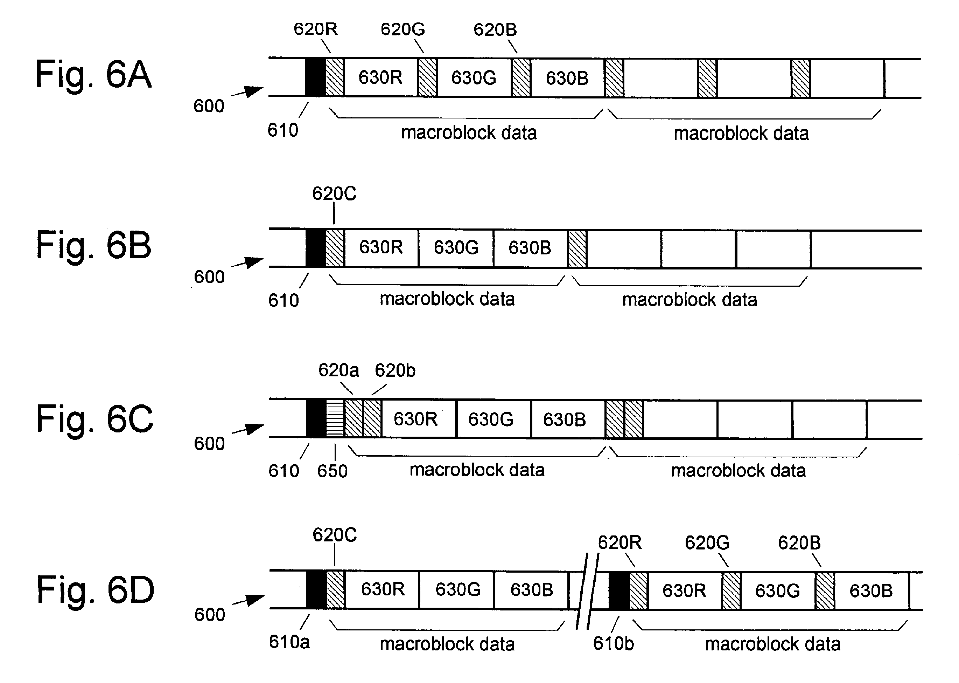

Figure 5E shows an example of the structure of a bitstream where the above described alternatives have been combined so that independent (intra) prediction modes are used for the first macroblock shown and a common (inter) prediction mode for the second macroblock. In general, the use of a common prediction mode or a set of independent prediction modes can be signaled by a flag in, e.g., the sequence header (cf. Fig 5C). The use of signaling information will be explained in greater detail below in the context of Fig. 6.

According to a further alternative, an intermediate approach for encoding the image components is pursued. For example, two color components may be predicted by a common prediction mode whereas the third color component is predicted by an independent prediction mode. Depending, for instance, on the image content, this may be advantageous for intra-prediction of RGB video data where a color gradient shows up in only two of the three color components.

In the case that some image components are predicted independently, whereas other image components are predicted by a common prediction mode, only a certain number, i.e. the number of independent prediction modes plus the number of common prediction modes, of prediction mode has to be encoded into the bitstream. In addition, assignment information has to be inserted into the bitstream that specifies the prediction mode for each image component. Consequently, the decoder has to detect the certain number of prediction modes from the encoded video data together with the assignment information in order to assign a prediction mode to each image component and to decode the image components accordingly.

Finally, it is desirable to have encoding and decoding methods that can handle image components in a flexible manner by adapting the number of prediction modes employed for encoding the image components. This flexibility may be used to meet coding efficiency and/or computational complexity requirements. Hence, coding efficiency, for instance, can be improved by determining on sequence, frame, slice, or even macroblock level, the optimum number of prediction modes for predicting the image components.

It is the particular approach of the present invention to improve flexibility of the encoder by providing a method to signal to the decoder the number of prediction modes that have been employed for encoding the image components. The decoder is thus able to detect the signaled number of prediction modes from the encoded video data and to decode the image components accordingly. Moreover, the decoder can signal the image components that have been predicted by a common prediction mode and the image components that have been predicted independently. The decoder is thus able to assign the correct prediction mode to each image component and decode the image components accordingly.

Examples of the bitstream structure according to the present invention are illustrated next with respect to Fig. 6.

Figure 6A illustrates an example of a bitstream 600 with independent prediction modes for each of an RGB color component. A number identifier 610 indicates that three prediction modes (620R, 620G, 620B) have to be detected from the encoded video data for each macroblock in order to decode the macroblock data (630R, 630G, 630B) of the three color components. After having extracted the number identifier, the decoder can detect the corresponding number of prediction modes from the encoded video data and decode the image components accordingly.

Figure 6B illustrates an example of a bitstream 600 with a common prediction mode for the RGB color components. The number identifier 610 thus indicates that only one prediction mode (620C) has to be detected from the encoded video data for each macroblock in order to decode the macroblock data (630R, 630G, 630B) of the three color components. After having extracted the number identifier 610, the decoder can detect the corresponding number of prediction modes for each block from the encoded video data and decode the image components accordingly.

Figure 6C illustrates an example of a bitstream 600 where two color components are predicted by common prediction mode whereas a third color component is predicted by an independent prediction mode. Consequently, the number identifier 610 indicates that two prediction modes (620a, 620b) have to be detected from the encoded video data for each macroblock. In addition, assignment information 650 identifies the color components that are commonly predicted and the color components that are independently predicted. After having extracted the number identifier 610 an the assignment information 650, the decoder is thus able to detect the corresponding number of prediction modes from the encoded video data and to assign the correct prediction mode to each of the color components in order to decode the macroblock data (630R, 630G, 630B) of the three color components.

The assignment information may, for example, contain a table that specifies for each image component whether the first, the second, etc., of the detected prediction modes is to be applied. Alternatively, the assignment information may also consist of a reference to one of a predefined plurality of such tables.

Figure 6D illustrates an example of a bitstream 600 where the coding of prediction modes is set adaptively. A first number identifier 610a indicates that only one prediction mode (620C) has to be detected from the encoded video data for each of the subsequent macroblocks in order to decode the macroblock data (630R, 630G, 630B) of the three color components. Then, a second number identifier 610b indicates that three prediction modes (620R, 620G, 620B) have to be detected from the encoded video data for each subsequent macroblock.

The examples shown in Fig. 6 are based on image component multiplexing on macroblock level as shown, for instance in Fig. 5A. However, the present invention is not restricted to this form of multiplexing and can be applied any type of multiplexing the bitstreams of the individual image components.

Although the above examples are mostly based on video data in RGB color space coding, the present invention is not limit in this respect. The present invention can be applied to video data with any type of color space coding, or, even more generally, to any type of image components. Moreover, the signaling by the number identifier and/or the assignment information is not necessarily part of the macroblock header. Instead, this signaling can be done, e.g., on Profile, Level, sequence, picture, frame, field, slice, or macroblock level. Finally, the present invention is not limited to video in the 4:4:4 format but can rather be applied also to 4:2:2 or 4:2:0 format video.

Summarizing, the present invention relates to encoding and decoding of video data consisting of a plurality of image components. The present invention provides an encoder and a decoder together with methods to signal to the decoder the number of prediction modes that have been employed for encoding the image components. The decoder is thus able to detect the signaled number of prediction modes from the encoded video data and to decode the image components accordingly. Moreover, the decoder signals the image components that have been predicted by a common prediction mode and the image components that have been predicted independently. The decoder is thus able to assign the correct prediction mode to each image component and decode the image components accordingly.

## Claims

1. A method for decoding encoded video data, said video data consisting of a plurality of image components, comprising the steps of:
extracting a number identifier (610) from the encoded video data (600),
determining the number of prediction modes to be detected from the encoded video data (600) in accordance with the extracted number identifier (610),
detecting the determined number of prediction modes (620) from the encoded video data (600);
assigning one of the detected prediction modes to each of the image components (630R, 630G, 630B); and
decoding each of the image components (630R, 630G, 630B) in accordance with the assigned prediction mode (620).

2. A method according to claim 1, further comprising the step of extracting assignment information (650) from the encoded video data (600), said assignment information (650) identifying for each image component (630R, 630G, 630B) the prediction mode (620a, 620b) that is to be assigned to said image component.

3. A method according to claim 2 wherein the assignment information (650) contains a reference to one of a plurality of predefined assignments of prediction modes and the corresponding image components.

4. A method according to any of claims 1 to 3 wherein the steps of detecting, assigning and decoding are performed on block or macroblock level.

5. A method according to claim 4 wherein the steps of extracting and determining are performed on profile, level, sequence, picture, slice, macroblock, or block level.

6. A method according to any of claims 1 to 5 wherein the prediction modes (620) comprise indication (MD) for either inter or intra prediction.

7. A method according to claim 6 wherein the prediction modes (620) comprise information on macroblock partition.

8. A method according to claim 6 or 7 wherein the prediction modes (620) comprise information on motion vectors (MV).

9. A method according to any of claims 6 to 8 wherein the prediction modes (620) comprise information on intra-prediction modes (IPM).

10. A method according to any of claims 1 to 9 wherein the plurality of image components comprises a plurality of color components.

11. A method according to claim 10 wherein the encoded video data is in either of 4:4:4, 4:2:2, or 4:2:0 format.

12. A method according to claim 10 or 11 wherein the plurality of image components comprises luminance and chrominance components.

13. A method according to claim 10 or 11 wherein the plurality of image components comprises red, green, and blue color components.

14. A method according to any of claims 1 to 13 wherein the plurality of image components comprises foreground and background video components.

15. A method according to any of claims 1 to 14 wherein the number identifier (610) is a binary representation of the number of prediction modes to be detected from the encoded video data (600).

16. A method according to any of claims 1 to 14 wherein the number identifier (610) is a one-bit flag indicating that either one prediction mode (620C) or three prediction modes (620R, 620G, 620B) have to be detected from the encoded video data (600).

17. A method for encoding video data, said video data consisting of a plurality of image components, comprising the steps of:
encoding each of the image components in accordance with a predetermined number of prediction modes (620) for obtaining encoded video data (600);
inserting the prediction modes (620) into the encoded video data (600); and
inserting a number identifier (610) into the encoded video data (600), said number identifier (610) identifies the predetermined number of said prediction modes (620).

18. A method according to claim 17, further comprising the step of inserting assignment information (650) into the encoded video data (600), said assignment information (650) identifying for each image component (630) the prediction mode (620) that has been used to encode said image component.

19. A method according to claim 17 or 18 wherein the step of encoding image components and inserting the prediction modes (620) are performed on macroblock or block level.

20. A method according to claim 19 wherein the step of inserting the number identifier (610) is performed on profile, level, sequence, picture, slice, macroblock, or block level.

21. A method according to any of claims 17 to 20 further comprising the step of determining the predetermined number of prediction modes.

22. A method according to claim 21 wherein the image components are encoded in accordance with a common prediction mode (620C) and wherein the predetermined number of prediction modes equals one.

23. A method according to claim 21 wherein the image components are encoded in accordance with independent prediction modes (620R, 620G, 620B) and wherein the predetermined number of prediction modes equals the number of image components.

24. A decoding apparatus for decoding encoded video data, said video data consisting of a plurality of image components, comprising:
a first extracting means for extracting a number identifier (610) from the encoded video data (600),
a determining means for determining the number of prediction modes to be detected from the encoded video data (600) in accordance with the extracted number identifier (610),
a detector for detecting the determined number of prediction modes (620) from the encoded video data (600);
an assigning means for assigning one of the detected prediction modes (620) to each of the image components (630); and
a decoder (300) for decoding each of the image components (630) in accordance with the assigned prediction mode (620).

25. A decoding apparatus according to claim 24, further comprising a second extracting means for extracting assignment information (650) from the encoded video data (600), said assignment information (650) identifying for each image component (630) the prediction mode (620) that is to be assigned to said image component.

26. A decoding apparatus according to claim 25 wherein the assignment information (650) contains a reference to one of a plurality of predefined assignments of prediction modes (620) and the corresponding image components (630).

27. A decoding apparatus according to any of claims 24 to 26 wherein the detector, the assigning means and the decoder (300) are operating on block or macroblock level.

28. A decoding apparatus according to claim 27 wherein the extracting means and the determining means are operating on profile, level, sequence, picture, slice, macroblock, or block level.

29. A decoding apparatus according to any of claims 24 to 28 wherein the prediction modes (620) comprise indication (MD) for either inter or intra prediction.

30. A decoding apparatus according to claim 29 wherein the prediction modes (620) comprise information on macroblock partition.

31. A decoding apparatus according to claim 29 or 30 wherein the prediction modes (620) comprise information on motion vectors (MV).

32. A decoding apparatus according to any of claims 29 to 31 wherein the prediction modes (620) comprise information on intra-prediction modes (IPM).

33. A decoding apparatus according to any of claims 24 to 32 wherein the plurality of image components comprises a plurality of color components.

34. A decoding apparatus according to claim 33 wherein the encoded video data is in either of 4:4:4, 4:2:2, or 4:2:0 format.

35. A decoding apparatus according to claim 33 or 34 wherein the plurality of image components comprises luminance and chrominance components.

36. A decoding apparatus according to claim 33 or 34 wherein the plurality of image components comprises red, green, and blue color components.

37. A decoding apparatus according to any of claims 24 to 36 wherein the plurality of image components comprises foreground and background video components.

38. A decoding apparatus according to any of claims 24 to 37 wherein the number identifier (610) is a binary representation of the number of prediction modes to be detected from the encoded video data (600).

39. A decoding apparatus according to any of claims 24 to 37 wherein the number identifier (610) is a one-bit flag indicating that either one prediction mode (620C) or three prediction modes (620R, 620G, 620B) have to be detected from the encoded video data (600).

40. An encoding apparatus for encoding video data, said video data consisting of a plurality of image components, comprising:
an encoder for encoding each of the image components in accordance with a predetermined number of prediction modes (620) for obtaining encoded video data (600);
a first inserting means for inserting the prediction modes (620) into the encoded video data (600); and
a second inserting means for inserting a number identifier (610) into the encoded video data (600), said number identifier (610) identifies the predetermined number of said prediction modes (620).

41. An encoding apparatus according to claim 40, further comprising a third inserting means for inserting assignment information (650) into the encoded video data (600), said assignment information identifying for each image component (630) the prediction mode (620) that has been used to encode said image component.

42. An encoding apparatus according to claim 40 or 41 wherein the encoder and the first inserting means are operating on macroblock or block level.

43. An encoding apparatus according to claim 42 wherein the second inserting means is inserting the number identifier (610) on profile, level, sequence, picture, slice, macroblock, or block level.

44. An encoding apparatus according to any of claims 40 to 43 further comprising a determining means for determining the predetermined number of prediction modes.

45. An encoding apparatus according to claim 44 wherein the image components are encoded in accordance with a common prediction mode (620C) and wherein the predetermined number of prediction modes equals one.

46. An encoding apparatus according to claim 44 wherein the image components are encoded in accordance with independent prediction modes (620R, 620G, 620B) and wherein the predetermined number of prediction modes equals the number of image components.
